# EUROPÄISCHE PATENTSCHRIFT

(11) **EP 3 875 007 B1**
(45) Veröffentlichungstag und Bekanntmachung des Hinweises auf die Patenterteilung: **08.05.2024**
(21) Anmeldenummer: 20161433.6
(22) Anmeldetag: 06.03.2020
(51) Int. Cl.: A47J 43/07

(54) **ZUBEREITUNGSGEFÄSS ZUM VERBINDEN MIT EINEM AUFNAHMEBEREICH EINES BASISGERÄTES EINER KÜCHENMASCHINE**
PREPARATION VESSEL FOR CONNECTING TO A RECEIVING AREA OF A KITCHEN APPLIANCE BASE DEVICE
RÉCIPIENT DE PRÉPARATION DESTINÉ À ÊTRE RACCORDÉ À UNE ZONE DE RÉCEPTION D'UN APPAREIL DE BASE D'UNE MACHINE DE CUISINE

(43) Veröffentlichungstag der Anmeldung: 08.09.2021
(60) Teilanmeldung: 24168511.4
(73) Patentinhaber: Vorwerk & Co. Interholding GmbH, 42275 Wuppertal (DE)
(72) Erfinder: Jansen, Sebastian, 44803 Bochum (DE); Bayard, Christian, 58456 Witten (DE)
(74) Vertreter: Müller, Enno

(56) Entgegenhaltungen:
- EP-A1- 2 165 632
- EP-A1- 2 371 251
- EP-A1- 2 698 088
- EP-A1- 3 287 054
- FR-A1- 2 908 620

## Beschreibung

### Gebiet der Technik

Die Erfindung betrifft ein Zubereitungsgefäß zum Verbinden mit einem Aufnahmebereich eines Basisgerätes einer elektromotorisch betriebenen Küchenmaschine, wobei das Zubereitungsgefäß eine Verriegelungseinrichtung zum Verriegeln des Zubereitungsgefäßes mit dem Basisgerät der Küchenmaschine aufweist, wobei die Verriegelungseinrichtung ein verlagerbares Kontaktelement aufweist, welches so an dem Zubereitungsgefäß angeordnet ist, dass dieses bei einem ordnungsgemäß mit dem Basisgerät verbundenen Zustand des Zubereitungsgefäßes von einer korrespondierenden Betätigungseinrichtung des Aufnahmebereiches der Küchenmaschine betätigbar ist, um mittels der Verriegelungseinrichtung ein Verriegeln des Zubereitungsgefäßes zu bewirken.

Des Weiteren betrifft die Erfindung eine elektromotorisch betriebene Küchenmaschine, insbesondere ein Mixgerät, mit einem Basisgerät und einem mit einem Aufnahmebereich des Basisgerätes verbindbaren Zubereitungsgefäß.

### Stand der Technik

Zubereitungsgefäße und Küchenmaschinen mit einem Zubereitungsgefäß sind im Stand der Technik bekannt. Das Gehäuse der Küchenmaschine kann beispielsweise einen Gefäßaufnahmebereich aufweisen, in welchen das Zubereitungsgefäß einsetzbar ist, wobei der Gefäßaufnahmebereich vorzugsweise zumindest bezogen auf einen Teilbereich formkorrespondierend zu dem Zubereitungsgefäß so ausgebildet ist, dass das Zubereitungsgefäß im Zuge des Verbindens mit dem Gefäßaufnahmebereich sowohl in Bezug auf eine vertikale Richtung, als auch in Bezug auf eine Umfangsrichtung des Zubereitungsgefäßes ausgerichtet werden kann.

In dem Aufnahmebereich kann des Weiteren beispielsweise eine Antriebswelle angeordnet sein, welche zum Antrieb eines sich in dem Zubereitungsgefäß befindenden Rührwerkes dient. Das Rührwerk wird zur Zubereitung von Speisen über einen küchenmaschinenseitigen Elektromotor angetrieben. Um bei einem Betrieb der Küchenmaschine, insbesondere des Rührwerks, ein Herausspritzen von Lebensmitteln aus dem Zubereitungsgefäß zu vermeiden und zu verhindern, dass ein Nutzer in das Zubereitungsgefäß hineingreift, weist das Zubereitungsgefäß beispielsweise einen Deckel auf, welcher mittels einer Verriegelungseinrichtung auf dem Topf verriegelbar ist.

Eine im Stand der Technik bekannte Küchenmaschine zeigt beispielsweise die Patentschrift EP 2 813 165 B1. Die Küchenmaschine weist eine Verriegelungseinrichtung zur Verriegelung des Zubereitungsgefäßes mit einem Deckel auf, welche zwei einen Topfrand sowie Deckelrand übergreifende Verriegelungsteile hat, die als um eine im Wesentlichen horizontale Achse rotierende Verriegelungswalzen ausgebildet sind. Die Verriegelungswalzen verriegeln durch Übergreifen von oben einerseits den Deckel auf dem Topf des Zubereitungsgefäßes, und andererseits auch das Zubereitungsgefäß an dem Basisgerät der Küchenmaschine. Die Verriegelungswalzen können um eine im Wesentlichen horizontal orientierte Achse von einer Freigabestellung in eine Verriegelungsstellung, und umgekehrt, rotiert werden.

Obwohl sich derartige Verriegelungseinrichtungen zur sicheren Verriegelung bewährt haben, sind diese daran gebunden, dass mit einem bestimmten Basisgerät einer Küchenmaschine auch ein bestimmtes, insbesondere mit der Höhe der Verriegelungswalzen übereinstimmendes Zubereitungsgefäß verwendet wird. Dadurch ist es ggf. nicht möglich, verschiedene Zubereitungsgefäße in Verbindung mit der Küchenmaschine zu benutzen, insbesondere Zubereitungsgefäße mit zueinander verschiedenen Höhen.
Des Weiteren ist aus der EP 3287054 A1 eine Küchenmaschine mit einer Verbindungsvorrichtung für ein Gefäß bekannt. Eine Verbindung des Gefäßes mit der Küchenmaschine erfolgt durch eine relative Verdrehung der Verbindungsvorrichtung, welche in radialer Richtung bewegbare Eingriffselemente verlagert, die das Gefäß an der Küchenmaschine festklemmen.
Die FR 2908620 A1 offenbart des Weiteren eine Küchenmaschine mit radial verschwenkbaren Rastelementen, welche bei Verbindung eines Gefäßes mit der Küchenmaschine in korrespondierende Durchtrittsöffnungen des Gefäßes einrasten können. Des Weiteren ist aus der EP 2371251 A1 eine Küchenmaschine mit einem Aufnahmebereich für ein Rührgefäß bekannt, wobei der Aufnahmebereich eine rotierbare Drehscheibe mit Hakenelementen aufweist, welche in korrespondierende Hakenelemente des Rührgefäßes eingreifen können, um das Rührgefäß mit der Küchenmaschine zu verriegeln.

### Zusammenfassung der Erfindung

Ausgehend von dem vorgenannten Stand der Technik ist es Aufgabe der Erfindung, ein Zubereitungsgefäß für eine Küchenmaschine weiterzubilden.

Zur Lösung der vorgenannten Aufgabe wird vorgeschlagen, dass die Verriegelungseinrichtung einen das Kontaktelement aufweisenden Verriegelungsring aufweist, welcher in Umfangsrichtung des Zubereitungsgefäßes rotierbar an dem Zubereitungsgefäß gelagert ist. Insbesondere wird vorgeschlagen, dass der Verriegelungsring bezogen auf eine übliche Gebrauchsstellung des Zubereitungsgefäßes unterseitig an dem Zubereitungsgefäß angeordnet ist. Der Verriegelungsring kann beispielsweise von außen an einer Umfangswandung des Zubereitungsgefäßes gelagert sein. Des Weiteren ist es möglich, insbesondere bei Verwendung eines Topffußes, dass der Verriegelungsring innerhalb des Topffußes an einer Innenwandung gelagert ist. Bei einem rotationssymmetrisch ausgebildeten Zubereitungsgefäß beziehungsweise Topffuß sind der Verriegelungsring und das Zubereitungsgefäß beziehungsweise der Topffuß koaxial zueinander ausgerichtet. Es sind weitere Ausführungsformen denkbar, bei welchen der Verriegelungsring nicht innen oder außen an einer Umfangswandung des Verriegelungsgefäßes beziehungsweise des Topffußes gelagert ist. Vielmehr kann der Verriegelungsring auch unterseitig an einer Bodenfläche des Zubereitungsgefäßes beziehungsweise Topffußes gelagert sein. In allen Fällen ist ein Befestigungselement vorgesehen, das den Verriegelungsring an dem Zubereitungsgefäß lagert, und zwar derart, dass eine Rotation des Verriegelungsringes relativ zu dem Zubereitungsgefäß ermöglicht ist. Insbesondere kann der Verriegelungsring
beispielsweise über eine Nut-Feder-Verbindung an dem Befestigungselement bzw. dem Zubereitungsgefäß gelagert sein. Der Verriegelungsring kann unmittelbar eine Verriegelung zwischen dem Zubereitungsgefäß und dem Basisgerät herbeiführen oder zunächst auf ein Zwischenelement einwirken, welches dann die Verriegelung herbeiführt. Der Verriegelungsring kann beispielsweise ein Element eines Bajonettverschlusses und/oder eine Kulisse mit Rampen oder Ähnlichem bereitstellen, wobei die Rampen insbesondere eine axiale Verlagerung des Zubereitungsgefäßes relativ zu dem Basisgerät ermöglichen. Durch die Rampe kann das Zubereitungsgefäß zusätzlich an das Basisgerät herangedrückt beziehungsweise herangezogen werden und insbesondere so verspannt werden, dass die verriegelte Stellung des Zubereitungsgefäßes relativ zu dem Basisgerät auch bei großen Drehzahlen des Rührwerkes der Küchenmaschine erhalten bleibt.

Die Verriegelungseinrichtung zum Verriegeln des Zubereitungsgefäßes mit dem Basisgerät der Küchenmaschine befindet sich an dem Zubereitungsgefäß selbst. Damit erübrigt sich eine an der Küchenmaschine ausgebildete Verriegelungseinrichtung, welche zur ordnungsgemäßen Verriegelung eine bestimmte Geometrie, insbesondere Höhe, des Zubereitungsgefäßes voraussetzen würde. Das Zubereitungsgefäß ist durch das an dem Zubereitungsgefäß bereitgestellte Kontaktelement so ausgebildet, dass die Verriegelungseinrichtung mittels einer Betätigungseinrichtung der das Zubereitungsgefäß aufnehmenden Küchenmaschine betätigt werden kann. Die Betätigungseinrichtung der Küchenmaschine verlagert dazu das Kontaktelement der Verriegelungseinrichtung relativ zu dem Zubereitungsgefäß. Vorzugsweise befindet sich das Kontaktelement unterseitig an dem Zubereitungsgefäß, so dass dieses bei Verbinden des Zubereitungsgefäßes mit dem Aufnahmebereich des Basisgerätes in Kontakt mit einem korrespondierenden Element der küchenmaschinenseitigen Betätigungseinrichtung kommt. Das Zubereitungsgefäß kann als zwei separat ausgebildete Elemente einen zuzubereitende Speisen aufnehmenden Topf und einen unterseitig mit dem Topf verbindbaren Topffuß aufweisen, wobei das Kontaktelement der Verriegelungseinrichtung vorzugsweise in beziehungsweise an dem Topffuß ausgebildet ist. Bei dieser Ausgestaltung kann der Topf des Zubereitungsgefäßes von dem Topffuß getrennt und beispielsweise einer Reinigung in einer Spülmaschine zugeführt werden. Wesentlich im Sinne der Erfindung ist jedenfalls, dass die Verriegelungseinrichtung ausschließlich dem Zubereitungsgefäß zugehörig ist und an dem Zubereitungsgefäß beziehungsweise dem Topffuß eine Schnittstelle gegeben ist, die eine Betätigung der Verriegelungseinrichtung des Zubereitungsgefäßes durch eine Betätigungseinrichtung der Küchenmaschine erlaubt. Die Schnittstelle befindet sich vorzugsweise unter dem Zubereitungsgefäß, bevorzugt in einem Bereich einer im Wesentlichen horizontalen Kontaktfläche zwischen dem Aufnahmebereich des Basisgerätes und dem Zubereitungsgefäß, insbesondere dem Topffuß des Zubereitungsgefäßes, so dass das Zubereitungsgefäß sehr unterschiedlich geformt sein kann, insbesondere in Bezug auf dessen Höhe und/oder Durchmesser. Eine Kompatibilität zwischen verschiedenen Zubereitungsgefäßen und verschiedenen Basisgerätes einer Küchenmaschine wird somit ermöglicht.

Eine zu dem Zubereitungsgefäß korrespondierende Küchenmaschine kann beispielsweise einen Elektromotor aufweisen, welcher das Kontaktelement des Zubereitungsgefäßes direkt antreibt. Alternativ kann die Betätigungseinrichtung der Küchenmaschine auch unter Zwischenanordnung eines Getriebes auf das Kontaktelement wirken. Das Getriebe der Küchenmaschine kann beispielsweise ein oder mehrere Verzahnungselemente aufweisen, beispielsweise mindestens ein von einer Abtriebswelle des Elektromotors angetriebenes Zahnrad. Das Kontaktelement des Zubereitungsgefäßes überträgt die Antriebskraft via der Verriegelungseinrichtung auf ein Element, welches das Verriegeln des Zubereitungsgefäßes mit dem Basisgerät der Küchenmaschine bewirkt.

Es wird vorgeschlagen, dass die Verriegelungseinrichtung einen das Kontaktelement aufweisenden Verriegelungsring aufweist, welcher in Umfangsrichtung des Zubereitungsgefäßes rotierbar an dem Zubereitungsgefäß gelagert ist. Insbesondere wird vorgeschlagen, dass der Verriegelungsring bezogen auf eine übliche Gebrauchsstellung des Zubereitungsgefäßes unterseitig an dem Zubereitungsgefäß angeordnet ist. Der Verriegelungsring kann beispielsweise von außen an einer Umfangswandung des Zubereitungsgefäßes gelagert sein. Des Weiteren ist es möglich, insbesondere bei Verwendung eines Topffußes, dass der Verriegelungsring innerhalb des Topffußes an einer Innenwandung gelagert ist. Bei einem rotationssymmetrisch ausgebildeten Zubereitungsgefäß beziehungsweise Topffuß sind der Verriegelungsring und das Zubereitungsgefäß beziehungsweise der Topffuß koaxial zueinander ausgerichtet. Es sind weitere Ausführungsformen denkbar, bei welchen der Verriegelungsring nicht innen oder außen an einer Umfangswandung des Verriegelungsgefä-ßes beziehungsweise des Topffußes gelagert ist. Vielmehr kann der Verriegelungsring auch unterseitig an einer Bodenfläche des Zubereitungsgefäßes beziehungsweise Topffußes gelagert sein. In allen Fällen ist ein Befestigungselement vorgesehen, das den Verriegelungsring an dem Zubereitungsgefäß lagert, und zwar derart, dass eine Rotation des Verriegelungsringes relativ zu dem Zubereitungsgefäß ermöglicht ist. Insbesondere kann der Verriegelungsring beispielsweise über eine Nut-Feder-Verbindung an dem Befestigungselement bzw. dem Zubereitungsgefäß gelagert sein. Der Verriegelungsring kann unmittelbar eine Verriegelung zwischen dem Zubereitungsgefäß und dem Basisgerät herbeiführen oder zunächst auf ein Zwischenelement einwirken, welches dann die Verriegelung herbeiführt. Der Verriegelungsring kann beispielsweise ein Element eines Bajonettverschlusses und/oder eine Kulisse mit Rampen oder Ähnlichem bereitstellen, wobei die Rampen insbesondere eine axiale Verlagerung des Zubereitungsgefäßes relativ zu dem Basisgerät ermöglichen. Durch die Rampe kann das Zubereitungsgefäß zusätzlich an das Basisgerät herangedrückt beziehungsweise herangezogen werden und insbesondere so verspannt werden, dass die verriegelte Stellung des Zubereitungsgefäßes relativ zu dem Basisgerät auch bei großen Drehzahlen des Rührwerkes der Küchenmaschine erhalten bleibt.

Es wird vorgeschlagen, dass der Verriegelungsring zumindest einen Vorsprung aufweist, welcher geeignet ist, hinter ein korrespondierendes Gegenelement des Basisgerätes der Küchenmaschine zu greifen, um das Zubereitungsgefäß mit dem Basisgerät zu verriegeln. Beispielsweise kann der Vorsprung ausgehend von dem Verriegelungsring nach radial innen oder außen weisen. Besonders bevorzugt weist der Verriegelungsring mehrere derartige Vorsprünge auf, um das Zubereitungsgefäß an mehreren Teilbereichen relativ zu dem Basisgerät zu fixieren. Besonders bevorzugt eignen sich mindestens drei Vorsprünge, um das Zubereitungsgefäß optimal mit dem Basisgerät zu verriegeln. Der Vorsprung kann in eine entsprechende Gegenkontur des Basisgerätes der Küchenmaschine eingreifen, nämlich beispielsweise hinter ein korrespondierendes Gegenelement. Ein solches Gegenelement kann beispielsweise als Verriegelungshaken ausgeführt sein, unter beziehungsweise hinter welchen ein Vorsprung des Verriegelungsringes rotiert werden kann. Besonders bevorzugt weist der Vorsprung oder das korrespondierende Gegenelement zusätzlich eine Keilform, insbesondere ausgebildet als Rampe, auf, um ein zuverlässiges Ineinandergreifen der beiden Konturen zu ermöglichen und die Verriegelungskraft entlang des Rotationsweges des Verriegelungsringes zu steigern. Zum Entriegeln des Vorsprungs aus dem korrespondierenden Gegenelement wird der Verriegelungsring dann in entgegengesetzte Richtung rotiert, so dass der Formschluss von Vorsprung und Gegenelement wieder aufgehoben wird. Der Vorsprung und das Gegenelement können insbesondere auch Teilelemente eines Bajonettverschlusses sein, wobei beispielsweise der Vorsprung in eine korrespondierende Öffnung des Basisgerätes hineingreift.

Des Weiteren kann vorgesehen sein, dass das Kontaktelement eine Verzahnung des Verriegelungsringes ist. Gemäß dieser Ausgestaltung ist der Verriegelungsring unmittelbar mittels der Betätigungseinrichtung des Aufnahmebereiches der Küchenmaschine betätigbar. Beispielsweise kann der Verriegelungsring zumindest abschnittsweise eine Innen- oder Außenverzahnung aufweisen, welche von der korrespondierenden Betätigungseinrichtung der Küchenmaschine mechanisch kontaktiert werden kann. Beispielsweise kann die Betätigungseinrichtung ihrerseits ebenfalls ein Verzahnungselement aufweisen, welches in die Verzahnung des Verrieglungsringes eingreift. Der Verriegelungsring und das Betätigungselement der Betätigungseinrichtung bilden dabei ein Zahnradgetriebe, das eine Antriebskraft eines Elektromotors der Küchenmaschine auf die Verrieglungseinrichtung des Zubereitungsgefäßes übertragen kann.

Des Weiteren wird vorgeschlagen, dass das Zubereitungsgefäß einen Topf, einen eine Topföffnung des Topfes verschließenden Deckel und eine Deckelverriegelungseinrichtung zum Verriegeln des Topfes mit dem Deckel aufweist, wobei die Deckelverriegelungseinrichtung eine mechanische Wirkverbindung zu der Verriegelungseinrichtung derart aufweist, dass eine Betätigung der Verriegelungseinrichtung eine Betätigung der Deckelverriegelungseinrichtung bewirkt. Gemäß dieser Ausgestaltung erfolgt neben der Verriegelung des Zubereitungsgefäßes mit dem Basisgerät der Küchenmaschine zusätzlich eine Verriegelung zwischen einem Topf und einem Deckel des Zubereitungsgefäßes. Die Verriegelungseinrichtung des Zubereitungsgefäßes ist zu diesem Zweck so ausgebildet, dass diese weitere bewegliche Teile an dem Zubereitungsgefäß antreiben kann, nämlich einen Mechanismus zur Verriegelung des Deckels mit dem Topf. Zu diesem Zweck ist ausgehend von der Verriegelungseinrichtung, nämlich insbesondere dem Verriegelungsring, ein Kupplungselement zu der Schnittstelle zwischen Topf und Deckel geführt.

Insbesondere wird vorgeschlagen, dass die Deckelverriegelungseinrichtung ein schwenkbar mit dem Verriegelungsring der Verriegelungseinrichtung verbundenes Funktionselement aufweist, welches von dem Verriegelungsring zu der Topföffnung geführt ist. Eine alternative Ausführungsform kann vorsehen, dass die Deckelverriegelungseinrichtung eine von dem Verriegelungsring angetriebene Rotationswelle aufweist, die von dem Verriegelungsring zu der Topföffnung geführt ist. Gemäß der ersten Ausführung kann das Funktionselement beispielsweise nach der Art eines Betätigungshebels ausgebildet sein, welcher an einer Schwenkachse einer Umfangswandung des Zubereitungsgefäßes gelagert ist. Der Verriegelungsring kann beispielsweise einen Mitnehmer für das Funktionselement aufweisen, über welchen es bei einer Rotation des Verriegelungsringes zu einem Verschwenken des Funktionselementes um die Schwenkachse kommt und ein dem Mitnehmer entgegengesetzter Endbereich des Funktionselementes auf ein Deckelverriegelungselement einwirkt, um den Deckel mit dem Topf zu verriegeln. Besonders vorteilhaft ist es, wenn das Funktionselement zumindest teilweise flexibel ausgebildet ist, damit dieses bei der Betätigung korrespondierend zu einer Form der Umfangswandung des Zubereitungsgefäßes verformt werden kann. Dadurch kann das Funktionselement in jeder einer Vielzahl von Schwenkstellungen (von einer Freigabestellung bis hin zu einer Verriegelungsstellung des Funktionselementes) an die Umfangswandung des Zubereitungsgefäßes angepasst werden. Der Schwenkweg des Funktionselementes, welcher erforderlich ist, um von der Freigabestellung in die Verriegelungsstellung zu gelangen, kann insbesondere durch die Position der Schwenkachse an dem Funktionselement reguliert werden. Beispielsweise kann das Funktionselement bezogen auf die Schwenkachse zwei gleich lange Endbereiche aufweisen, oder aber zwei unterschiedlich lange Endbereiche. Bei einem sich in Richtung der Topföffnung aufweitenden Zubereitungsgefäß kann es beispielsweise vorteilhaft sein, die Schwenkachse näher zu dem Verriegelungsring zu platzieren als zu der Topföffnung des Zubereitungsgefäßes. Gemäß der zweiten vorgeschlagenen Ausbildung kann die Deckelverriegelungs einrichtung eine von dem Verriegelungsring angetriebene Rotationswelle aufweisen. Bei dieser Ausführung weist der Verriegelungsring beispielsweise eine Außenverzahnung auf, in welche eine korrespondierende Verzahnung der Rotationswelle eingreift und somit bei Rotation des Verriegelungsringes mitrotiert. Das von dem Verriegelungsring wegweisende Ende der Rotationswelle kann beispielsweise ein Deckelverriegelungselement aufweisen, oder auf ein Deckelverriegelungselement einwirken, das dann die Verriegelung zwischen dem Deckel und dem Topf des Zubereitungsgefäßes bewirkt. Des Weiteren sind auch andere Ausführungsformen denkbar, beispielsweise kann die Deckelverriegelungseinrichtung von dem Verriegelungsring bis zu der Topföffnung mehrere hintereinander angeordnete und mechanisch wechselwirkende Antriebselemente aufweisen, beispielsweise verzahnte Elemente, die ineinandergreifen und somit die Rotationsbewegung des Verriegelungsringes in eine Bewegung des Deckelverriegelungselementes umsetzen, die schließlich zu einer Verriegelung des Topfes mit dem Deckel führt. Insbesondere kann ein Zahnradgetriebe zum Einsatz kommen, welches mehrere mechanisch ineinandergreifende Zahnräder umfasst.

Des Weiteren wird vorgeschlagen, dass die Deckelverriegelungseinrichtung ein Deckelverriegelungselement aufweist, welches ausgebildet ist, hinter einen Teilbereich des Deckels zu greifen und/oder den Deckel relativ zu dem Topf zu verlagern, und dadurch eine Verriegelung des Topfes mit dem Deckel zu bewirken. Das Deckelverriegelungselement kann insbesondere in mechanischer Wirkverbindung mit dem zuvor genannten schwenkbaren Funktionselement oder der Rotationswelle stehen. Insbesondere wird vorgeschlagen, dass das Deckelverriegelungselement ein rotierbar an dem Topf gelagerter, die Topföffnung umgebender Deckelverriegelungsring ist, welcher eine Bajonettverbindung mit einem Teilbereich des Deckels eingehen kann. Dieser Deckelverriegelungsring umgibt die Topföffnung und ist vorzugsweise bezogen auf eine axiale Richtung des Zubereitungsgefäßes fixiert, so dass der Deckelverrie gelungsring zwar um die Topföffnung rotieren kann, jedoch seine axiale Position relativ zu der Topföffnung beibehält. Um die Rotation des Deckelverriegelungsringes zu erleichtern, kann allerdings auch ein geringes axiales Bewegungsspiel zugelassen sein. Der Deckelverriegelungsring wird wie zuvor beschrieben durch eine Betätigung der Verriegelungseinrichtung rotiert. Der Deckelverriegelungsring kann seinerseits bspw. unmittelbar eine Verriegelung zwischen dem Topf und dem Deckel herbeiführen oder zunächst auf ein Zwischenelement einwirken, welches dann die Verriegelung herbeiführt. Der Deckelverriegelungsring kann beispielsweise ein Element eines Bajonettverschlusses bereitstellen und/oder eine Kulisse mit Rampen oder Ähnlichem, welche eine insbesondere axiale Verlagerung des Deckels relativ zu dem Topf ermöglichen. Dadurch kann der Deckel auf den Topf gedrückt oder gezogen werden und insbesondere so verspannt werden, dass eine fluiddichte Verriegelung des Topfes gewährleistet ist. Das Deckelverriegelungselement kann alternativ auch beispielsweise als verlagerbarer, insbesondere schwenkbarer, Haken ausgebildet sein, welcher hinter einen Teilbereich des Deckels greift. Des Weiteren kann das Deckelverriegelungselement beispielsweise elastisch verformbar sein. Die Form des Deckelverriegelungselementes kann sich somit durch elastische Verformung ändern, wobei das Deckelverriegelungselement bei Verformung auf den Deckel zugreifen und diesen mit dem Topf verriegeln kann. Vorteilhaft kann auch vorgesehen sein, dass das Deckelverriegelungselement durch eine Führungseinrichtung des Topfes geführt ist, welcher eine elastische Verformung des Deckelverriegelungselementes herbeiführt, so dass zumindest zwei definierte Stellungen, nämlich eine nicht verriegelte Stellung und eine verriegelte Stellung, erreicht werden können.

Es kann des Weiteren vorgesehen sein, dass das Funktionselement oder die Rotationswelle stabförmig mit einer überwiegenden Längserstreckung ausgebildet ist, wobei das Funktionselement oder die Rotationswelle insbesondere durch eine Wandung des Topfes und/oder einen Topfgriff des Topfes geführt ist. Die stabförmige Ausbildung des Funktionselementes beziehungsweise der Rotationswelle ermöglicht die Führung durch die Wandung des Topfes beziehungsweise den Topfgriff. Durch die längliche Ausgestaltung kann das Funktionselement beziehungsweise die Rotationswelle von dem Verriegelungsring zu der Topföffnung geführt sein, wobei auch relativ große Distanzen überwunden werden können, ohne viele Einzelteile zur Übertragung der mechanischen Kraft zu benötigen. Dadurch kann sich insbesondere eine Ausgestaltung ergeben, bei welcher alle Elemente der Deckelverriegelungseinrichtung in das Gehäuse des Zubereitungsgefäßes integriert sind und nicht nach außen ragen, wo sich ein Nutzer des Zubereitungsgefäßes verletzten könnte oder sich Lebensmittelreste oder Schmutz ablagern können. Somit wird nicht zuletzt auch die Reinigung des Zubereitungsgefäßes erleichtert. In der Wandung des Topfes beziehungsweise in dem Topfgriff kann ein Hohlraum vorgesehen sein, innerhalb dessen sich das Funktionselement oder die Rotationswelle erstreckt. Das Funktionselement beziehungsweise die Rotationswelle kann dann im Bereich der Topföffnung auf das Deckelverriegelungselement einwirken.

Neben dem zuvor beschriebenen Zubereitungsgefäß wird mit der Erfindung des Weiteren eine elektromotorisch betriebene Küchenmaschine, insbesondere ein Mixgerät, vorgeschlagen, welches ein Basisgerät und ein mit einem Aufnahmebereich des Basisgerätes verbindbares Zubereitungsgefäß aufweist, das nach einer der zuvor beschriebenen Ausführungen ausgebildet ist, wobei das Basisgerät eine Betätigungseinrichtung aufweist, welche eingerichtet ist, die Verriegelungseinrichtung des Zubereitungsgefäßes in einem miteinander verbundenen Zustand von Basisgerät und Zubereitungsgefäß über das Kontaktelement der Verriegelungseinrichtung zu betätigen. Wie bereits zuvor in Bezug auf das Zubereitungsgefäß erläutert, ist die Verriegelungseinrichtung eine Einrichtung des Zubereitungsgefäßes selbst. Die elektromotorisch betriebene Küchenmaschine stellt selbst keine Verriegelungselemente bereit, die das Zubereitungsgefäß an dem Basisgerät der Küchenmaschine fixieren. Das Basisgerät der Küchenmaschine weist jedoch die Betätigungseinrichtung auf, die der Betätigung der Verriegelungseinrichtung des Zubereitungsgefäßes dient. Zu diesem Zweck greift ein Betätigungselement des Basisgerätes vorteilhaft unter das Zubereitungsgefäß, um das Kontaktelement der Küchenmaschine zu betätigen. Bei dem Betätigungselement des Basisgerätes kann es sich beispielsweise um ein Antriebsritzel handeln, welches das Kontaktelement des Zubereitungsgefäßes, bewegt oder verlagert. Die weiteren Merkmale und Vorteile der Küchenmaschine ergeben sich des Weiteren wie zuvor in Bezug auf das Zubereitungsgefäß erläutert. Insgesamt wird somit eine Küchenmaschine geschaffen, die mit einer Vielzahl von unterschiedlich ausgebildeten Zubereitungsgefäßen betrieben werden kann. Insbesondere ist die ordnungsgemäße Funktion der Küchenmaschine nicht mehr von einer bestimmten Höhe eines Zubereitungsgefäßes abhängig. Vielmehr stellt das Zubereitungsgefäß der Küchenmaschine nun eine eigene Verriegelungseinrichtung bereit, so dass das Basisgerät der Küchenmaschine keine Verriegelungseinrichtung für das Zubereitungsgefäß aufweisen muss. Der Topf des Zubereitungsgefäßes kann des Weiteren und insbesondere eine Vielzahl unterschiedlicher Höhen aufweisen und trotzdem noch so mit dem Basisgerät verbunden werden, dass beispielsweise auch der Deckel optimal mit dem Topf verriegelt werden kann. Der Topf ist in jedem Fall so ausgebildet, dass dieser ein Kontaktelement zur Betätigung der Verriegelungseinrichtung durch ein Betätigungselement des Basisgerätes der Küchenmaschine aufweist, wobei eine in dem Basisgerät angeordnete Betätigungseinrichtung entsprechend eine Verriegelung des Zubereitungsgefäßes mit dem Basisgerät herbeiführen kann. Das Basisgerät weist als Betätigungseinrichtung vorzugsweise einen Elektromotor mit einem zugeordneten Getriebe auf, welches auf das Kontaktelement der Verriegelungseinrichtung des Zubereitungsgefäßes einwirkt und somit eine Verriegelung des Zubereitungsgefäßes mit dem Basisgerät beziehungsweise zusätzlich auch eine Verriegelung eines Deckels auf dem Topf des Zubereitungsgefäßes veranlasst.

### Kurze Beschreibung der Zeichnungen

Im Folgenden wird die Erfindung anhand von Ausführungsbeispielen näher erläutert. Es zeigen:
- Fig. 1: eine Küchenmaschine mit einem Zubereitungsgefäß,
- Fig. 2: einen Längsschnitt durch die Küchenmaschine und das Zubereitungsgefäß,
- Fig. 3: eine perspektivische Unteransicht des Zubereitungsgefäßes,
- Fig. 4: eine perspektivische Draufsicht auf die Küchenmaschine,
- Fig. 5: eine vergrößerte Ansicht eines Topffußes des Zubereitungsgefäßes gemäß Fig. 3,
- Fig. 6: eine Explosionsdarstellung eines Topffußes mit einer Verriegelungseinrichtung,
- Fig. 7: eine Draufsicht auf einen Aufnahmebereich der Küchenmaschine,
- Fig. 8: einen Querschnitt durch den Topffuß des Zubereitungsgefäßes,
- Fig. 9: einen Querschnitt durch den Topffuß des Zubereitungsgefäßes mit Anschluss an den Aufnahmebereich der Küchenmaschine in einer Freigabestellung einer Verriegelungseinrichtung,
- Fig. 10: das Zubereitungsgefäß und die Küchenmaschine gemäß Fig. 9 in einer Verriegelungsstellung der Verriegelungseinrichtung,
- Fig. 11: den Topffuß gemäß der Schnittlinie XI in Fig. 10,
- Fig. 12: ein Zubereitungsgefäß mit einer Deckelverriegelungseinrichtung in einer Freigabestellung,
- Fig. 13: das Zubereitungsgefäß gemäß Fig. 12 mit der Deckelverriegelungseinrichtung in einer Verriegelungsstellung,
- Fig. 14: das Zubereitungsgefäß mit einem schiebebeweglichen Deckelverriegelungselement,
- Fig. 15: das Zubereitungsgefäß mit einem aufgelegten Deckel,
- Fig. 16: das Zubereitungsgefäß mit abgehobenem Deckel,
- Fig. 17: ein Zubereitungsgefäß mit einer Deckelverriegelungseinrichtung gemäß einer alternativen Ausführungsform,
- Fig. 18: ein Zubereitungsgefäß mit einer Deckelverriegelungseinrichtung gemäß einer weiteren Ausführungsform.

### Beschreibung der Ausführungsformen

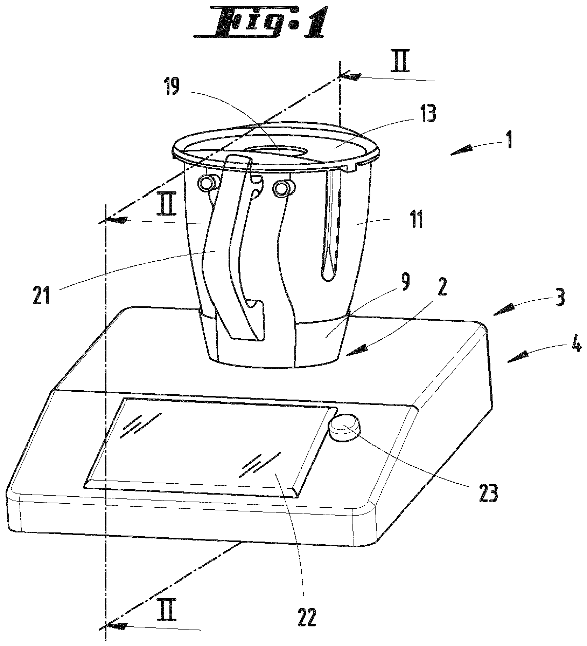

Fig. 1 zeigt eine Küchenmaschine 4 mit einem Basisgerät 3, welches einen Aufnahmebereich 2 zur Verbindung mit einem Zubereitungsgefäß 1 aufweist. Das Basisgerät 3 ist hier beispielhaft besonders flach ausgebildet, wobei das Zubereitungsgefäß 1 im Wesentlichen nur auf dem Basisgerät 3 steht, jedoch nicht von diesem umfasst wird. Das Basisgerät 3 der Küchenmaschine 4 verfügt über ein Display 22 zum Anzeigen von Funktionen der Küchenmaschine 4 und ggf. Rezepten, welche mittels der Küchenmaschine 4 zubereitet werden können. Neben dem Display 22 befindet sich ein Schalter 23, welcher einerseits zum Ein- und Ausschalten der Küchenmaschine 4, und andererseits zum Bestätigen von Eingabebefehlen oder Ähnlichem dient. Das Zubereitungsgefäß 1 weist einen Topf 11 mit einem Topfgriff 21 und einem Topffuß 9 auf, welcher zur Verbindung mit dem Aufnahmebereich 2 der Küchenmaschine 4 dient, sowie einen, eine Topföffnung 12 des Topfes 11 verschließenden Deckel 13 mit einer Deckelöffnung 19. Durch die Deckelöffnung 19 hindurch können beispielsweise Zutaten in den Topf 11 des Zubereitungsgefäßes 1 eingegeben werden.

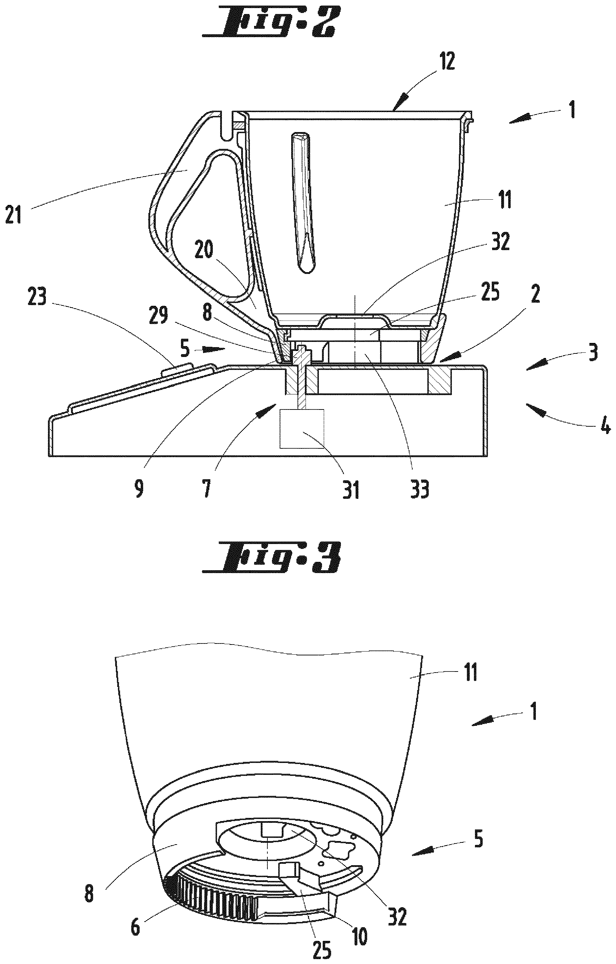

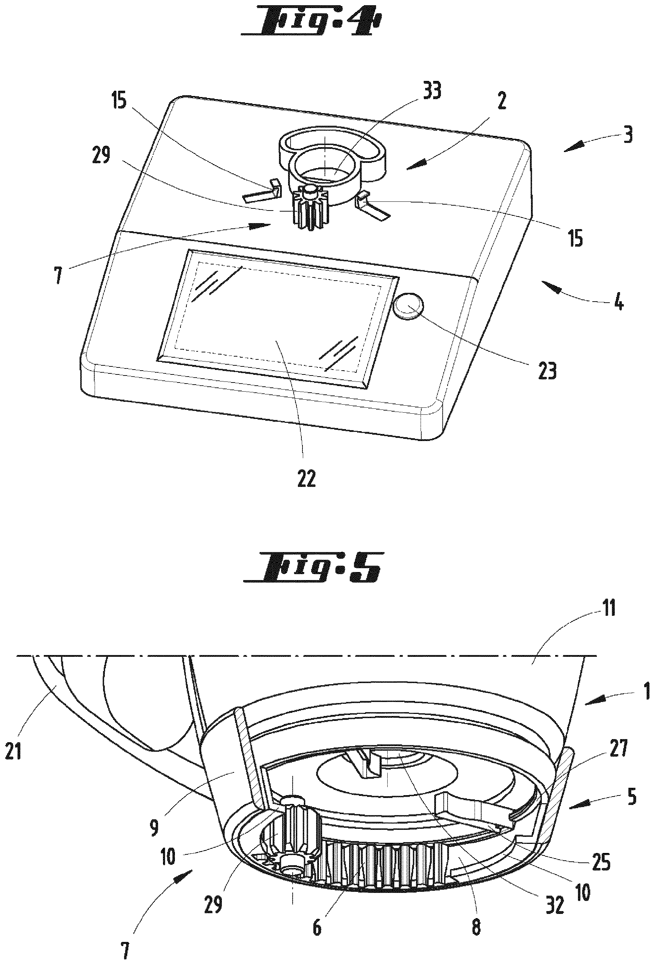

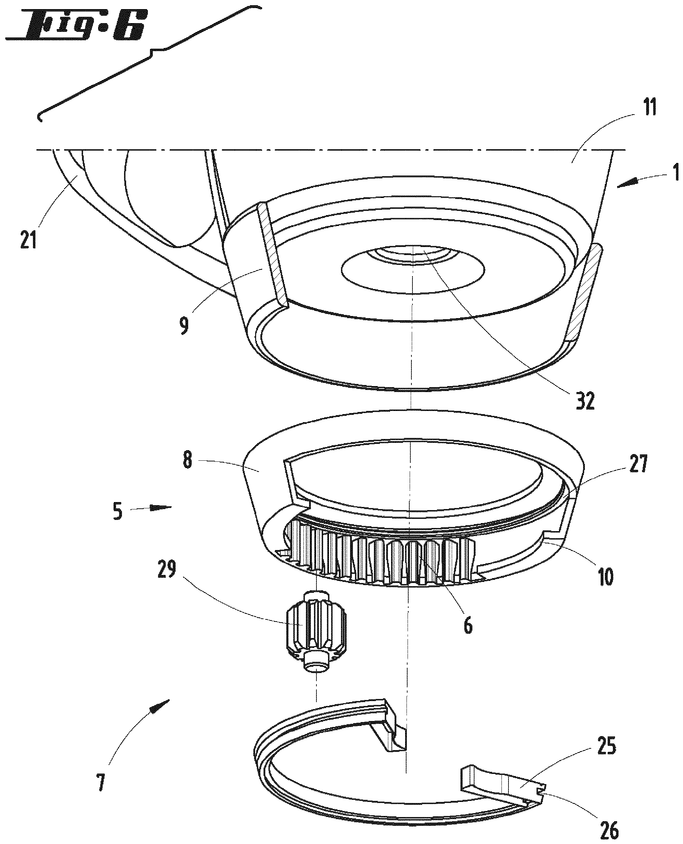

Fig. 2 zeigt einen Längsschnitt durch das Zubereitungsgefäß 1 und die Küchenmaschine 4. Das Zubereitungsgefäß 1 weist eine Wandung 20 auf, die hier beispielsweise mit einem Hohlraum ausgebildet ist. Der Aufnahmebereich 2 der Küchenmaschine 4 weist eine Gehäuseöffnung 33 zum Durchtritt eines nicht dargestellten Rührwerks auf. Das Rührwerk kann beispielsweise einen Messersatz tragen, welcher in das Zubereitungsgefäß 1 hineinragt und dort Speisen zerkleinern, rühren und/oder kneten kann. Das Rührwerk wird üblicherweise durch einen ebenfalls nicht dargestellten Elektromotor angetrieben. Zu der Gehäuseöffnung 33 des Basisgerätes 3 korrespondiert eine Durchtrittsöffnung 32 des Zubereitungsgefäßes 1, durch welche hindurch das Rührwerk in das Innere des Zubereitungsgefäßes 1 geführt ist. Das Basisgerät 3 der Küchenmaschine 4 weist des Weiteren eine Betätigungseinrichtung 7 mit einem Betätigungselement 29 auf, welches hier in der Form eines rotierbaren Antriebsritzels ausgebildet ist. Das Antriebsritzel wird mittels eines Elektromotors 31 der Küchenmaschine 4 rotiert. Das Zubereitungsgefäß 1 weist an dem Topffuß 9 eine Verriegelungseinrichtung 5 mit einem Verriegelungsring 8 auf, welcher rotierbar an einer Innenwandung des Topffußes 9 gelagert ist. Der Verriegelungsring 8 wird durch ein Befestigungselement 25 an dem Topf 11 gehalten. Beispielhaft weist das Befestigungselement 25 hier - wie in den Figuren 5 und 6 dargestellt - eine Nut 26 auf, in welche ein Ring 27 des Verriegelungsringes 8 eingreift. Das Befestigungselement 25 kann beispielsweise mittels einer Schraub- oder Rastverbindung an einer Unterseite des Topfes 11 befestigt sein. Der Verriegelungsring 8 weist nach innen gewandt ein Kontaktelement 6 in der Form einer Verzahnung auf, welche mit der Verzahnung des Betätigungselementes 29 der Betätigungseinrichtung 7 der Küchenmaschine 4 kämmt. An dem Verriegelungsring 8 sind des Weiteren zwei nach radial innen gewandte Vorsprünge 10 ausgebildet, welche sich in Umfangsrichtung des Verriegelungsringes 8 über definierte Umfangsabschnitte erstrecken. Es können auch noch weitere Vorsprünge 10 (oder nur ein einziger) vorgesehen sein.

Fig. 4 zeigt den Aufnahmebereich 2 der Küchenmaschine 4 im Einzelnen. Neben dem Betätigungselement 29 der Betätigungseinrichtung 7 und der Gehäuseöffnung 33 zum Durchtritt des Rührwerks aus dem Basisgerät 3 der Küchenmaschine 4 befinden sich in dem Aufnahmebereich 2 zwei Gegenelemente 15 zur Wechselwirkung mit den Vorsprüngen 10 des Verriegelungsringes 8 des Zubereitungsgefäßes 1.

Fig. 6 zeigt eine Explosionsdarstellung des unteren Teilbereiches des Zubereitungsgefäßes 1 mit dem Topffuß 9, der Verriegelungseinrichtung 5, dem Betätigungselement 29 der Küchenmaschine 4 und dem Befestigungselement 25.

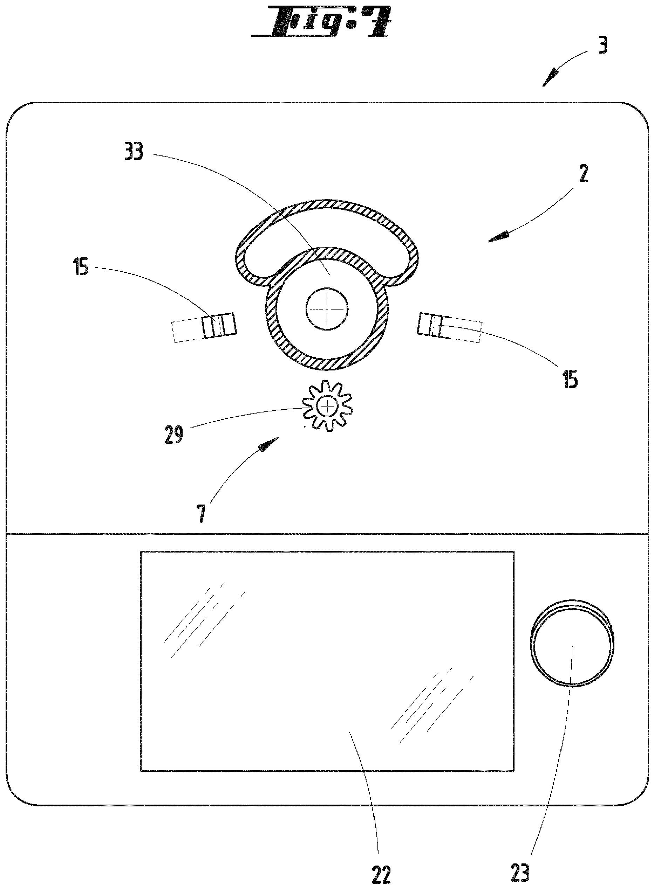

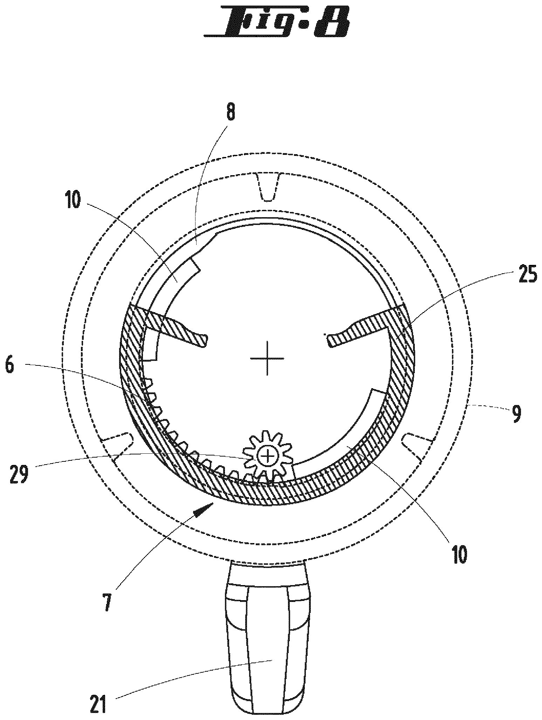

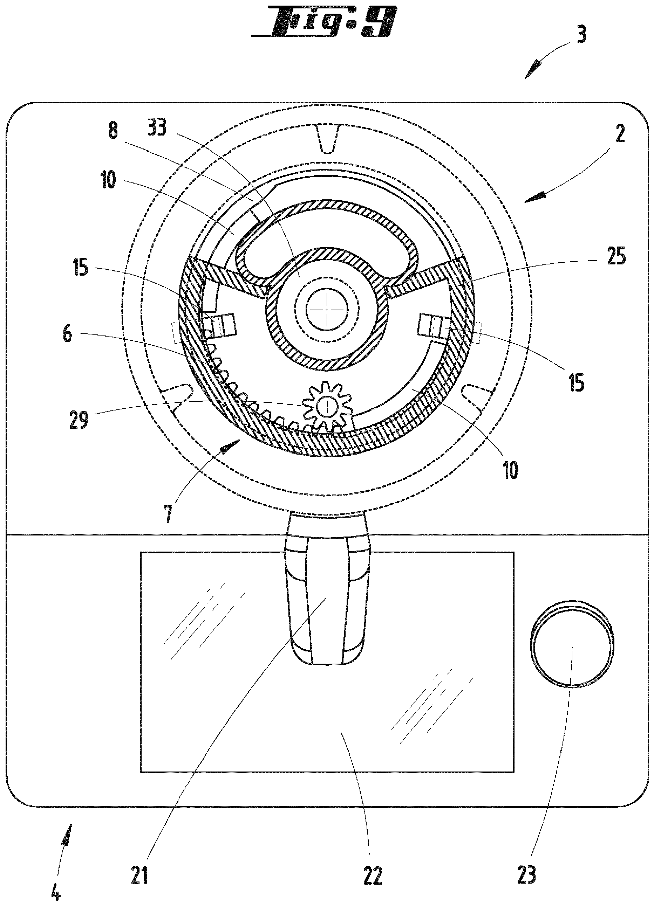

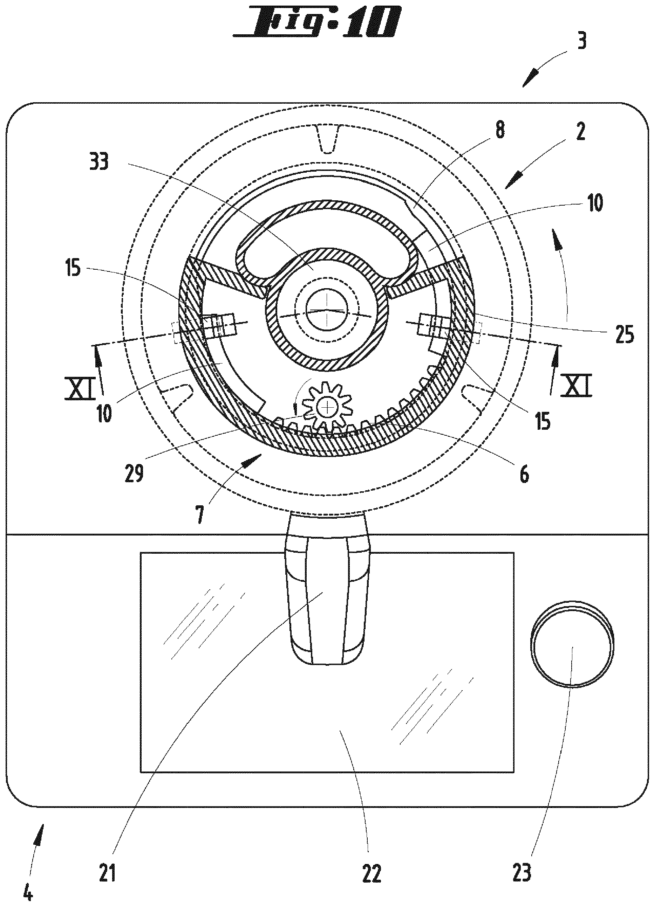

Die Figuren 7 bis 10 zeigen unterschiedliche Ansichten des Aufnahmebereiches 2 der Küchenmaschine 4 bzw. des Topffußes 9 des Zubereitungsgefä-ßes 1. Fig. 7 zeigt eine Draufsicht auf den Aufnahmebereich 2 des Basisgerätes 3 ohne angeordnetes Zubereitungsgefäß 1. Die Fig. 8 zeigt einen Schnitt durch den Topffuß 9 des Zubereitungsgefäßes 1 mit dem mittels des Befestigungselementes 25 befestigten Verriegelungsring 8, dessen verzahntes Kontaktelement 6 mit einer Verzahnung des Betätigungselementes 29 des Basisgerätes 3 der Küchenmaschine 4 kämmt. Die Figuren 9 und 10 zeigen unterschiedliche Verriegelungszustände der Verriegelungseinrichtung 5 des Zubereitungsgefäßes 1. In Fig. 9 ist ein Freigabezustand dargestellt, bei welchem sich die Vorsprünge 10 in Umfangsrichtung des Verriegelungsringes 8 neben den Gegenelementen 15 des Aufnahmebereiches 2 der Küchenmaschine 4 befinden. In dieser Freigabestellung kann das Zubereitungsgefäß 1 von dem Aufnahmebereich 2 abgehoben werden, ohne dass die Vorsprünge 10 von den Gegenelementen 15 zurückgehalten werden. Fig. 10 zeigt hingegen einen Verriegelungszustand, in welchem die hakenförmigen Gegenelemente 15 über die Vorsprünge 10 des Verriegelungsringes 8 greifen und ein axiales Abheben des Zubereitungsgefäßes 1 von der Küchenmaschine 4 verhindern. In dieser Stellung ist das Zubereitungsgefäß 1 sicher auf dem Basisgerät 3 der Küchenmaschine 4 fixiert.

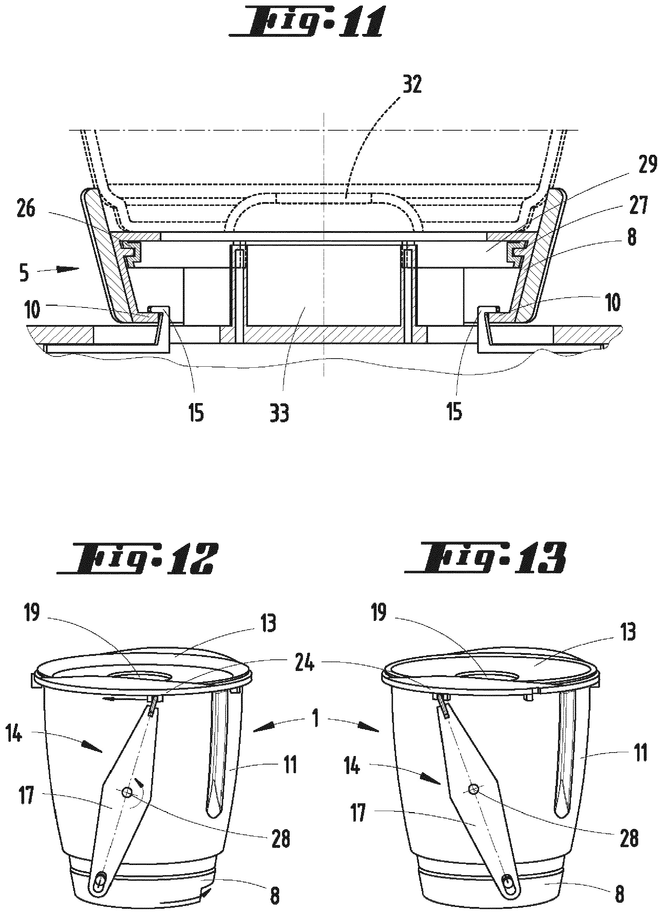

Fig. 11 zeigt einen Längsschnitt durch einen unteren Teilbereich des Zubereitungsgefäßes 1 entlang der Linie XI gemäß Fig. 10. Erkennbar ist dort, wie die Gegenelemente 15 über die Vorsprünge 10 greifen.

Die Erfindung gemäß den Figuren 1 bis 11 funktioniert so, dass ein Nutzer das Zubereitungsgefäß 1 mit dem Topffuß 9 auf den Aufnahmebereich 2 der Küchenmaschine 4 setzt, nämlich so, dass die Gehäuseöffnung 33 des Aufnahmebereiches 2 und die Durchtrittsöffnung 32 des Zubereitungsgefä-ßes 1 für das Rührwerk koaxial ausgerichtet sind, d.h. übereinanderliegen. In einer korrekten Ausrichtung legt sich das an der Unterseite des Topfes 11 befestigte Befestigungselement 25 um eine Kontur des Aufnahmebereiches 2, welche die Gehäuseöffnung 33 (und hier zusätzlich einen Durchtritt für nicht weiter dargestellte elektrische Anschlüsse) begrenzt. Sodann kann der Nutzer zum Beispiel manuell einen Betrieb der Verriegelungseinrichtung 5 starten, um das Zubereitungsgefäß an dem Basisgerät 3 der Küchenmaschine 4 zu fixieren. Alternativ, und dies vorzugsweise, kann an dem Aufnahmebereich 2 der Küchenmaschine 4 ein Kontaktschalter vorgesehen sein, welcher einen Kontakt eines Zubereitungsgefäßes 1 mit dem Aufnahmebereich 2 detektiert und dann automatisch einen Betrieb des Elektromotors 31 veranlasst, welcher das Betätigungselement 29 der Betätigungseinrichtung 7 der Küchenmaschine 4 rotiert. Dadurch kommt es zu einer Rotation des Verriegelungsringes 8 des Zubereitungsgefäßes 1. Ausgehend von dem in Fig. 9 dargestellten Zustand greifen die hakenförmigen Gegenelemente 15 des Aufnahmebereiches 2 bei fortgeführter Rotation des Verriegelungsringes 8 über die Vorsprünge 10 des Verriegelungsringes 8 und verriegeln das Zubereitungsgefäß 1 sicher mit der Küchenmaschine 4. Es ist nun möglich, die Küchenmaschine 4 auch bei großen Drehzahlen des Rührwerkes zu betreiben, ohne dass die Gefahr besteht, dass das Zubereitungsgefäß 1 kippt oder klappert.

Die Verriegelung des Verriegelungsringes 8 mit den Gegenelementen 15 des Basisgerätes 3 wird durch eine keilförmige Stirnseite (bezogen auf die Rotationsrichtung) des Vorsprungs 10 bzw. des Gegenelementes 15 erleichtert. Eine solche Keilform an den Kontaktflächen ermöglicht ein zuverlässiges Ineinandergreifen der gegenseitigen Konturen von Vorsprung 10 und Gegenelement 15. Zudem kann die Verriegelungskraft dadurch auch zusätzlich entlang einer Rampe vergrößert werden, bis schließlich eine spielfreie Verbindung zwischen dem Zubereitungsgefäß 1 und dem Aufnahmebereich 2 der Küchenmaschine 4 geschaffen ist. Zum Entriegeln des Zubereitungsgefäßes wird der Verriegelungsring 8 dann wieder in entgegengesetzte Richtung rotiert, so dass der Formschluss des Vorsprunges 10 mit dem korrespondierenden Gegenelement 15 aufgehoben wird.

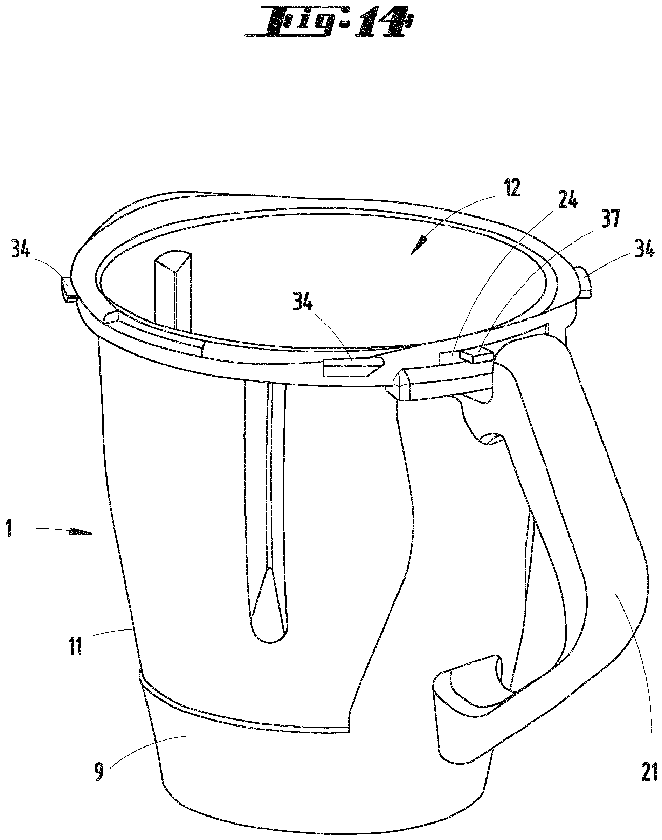

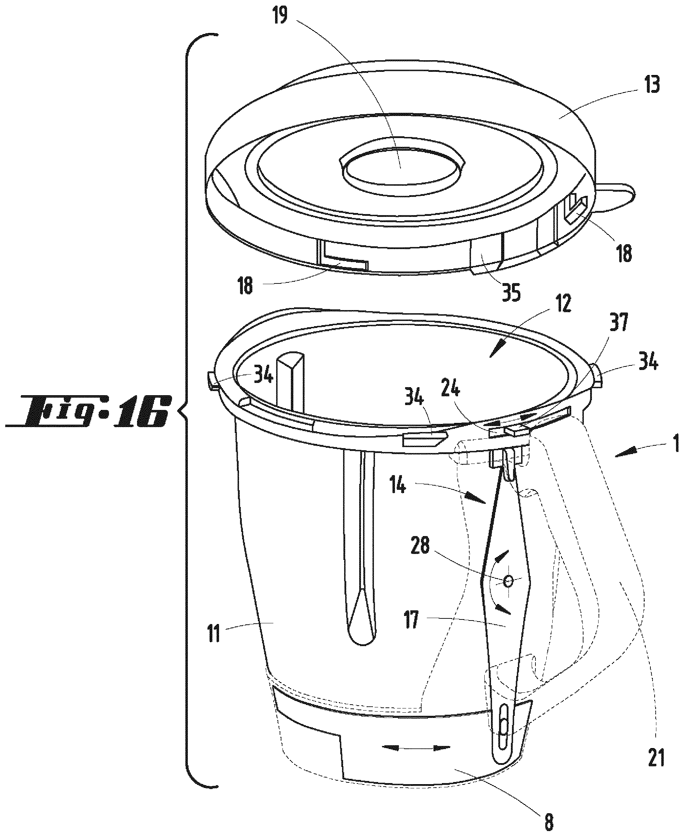

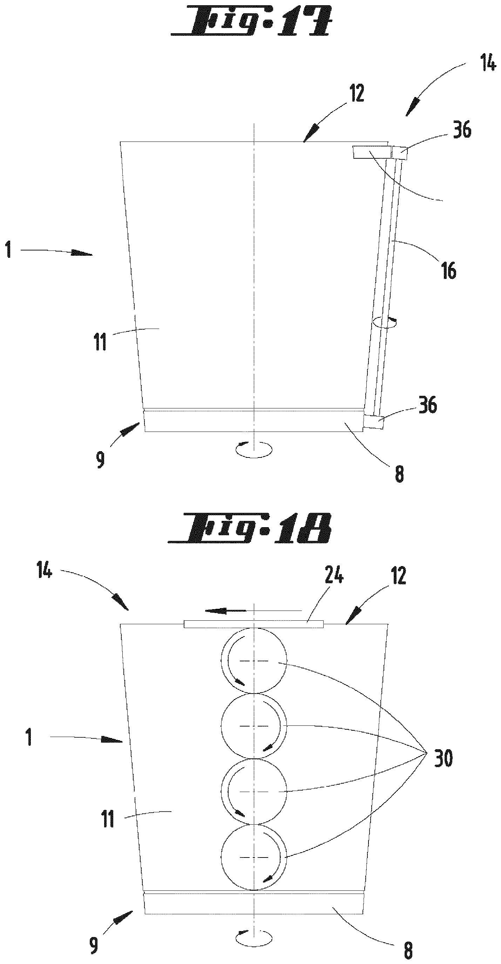

Die Figuren 12 bis 18 zeigen weitere Ausführungsformen erfindungsgemäßer Zubereitungsgefäße 1, welche neben einer Verriegelungseinrichtung 5 zur Verriegelung des Zubereitungsgefäßes 1 an dem Basisgerät 3 der Küchenmaschine 4 des Weiteren auch zusätzlich eine Deckelverriegelungseinrichtung 14 zur Verriegelung des Topfes 11 des Zubereitungsgefäßes 1 mit dem Deckel 13 aufweisen. Die Figuren 12 bis 16 zeigen eine erste Ausführungsform einer solchen Deckelverriegelungseinrichtung 14, während die Figuren 17 und 18 jeweils weitere Ausführungsformen darstellen.

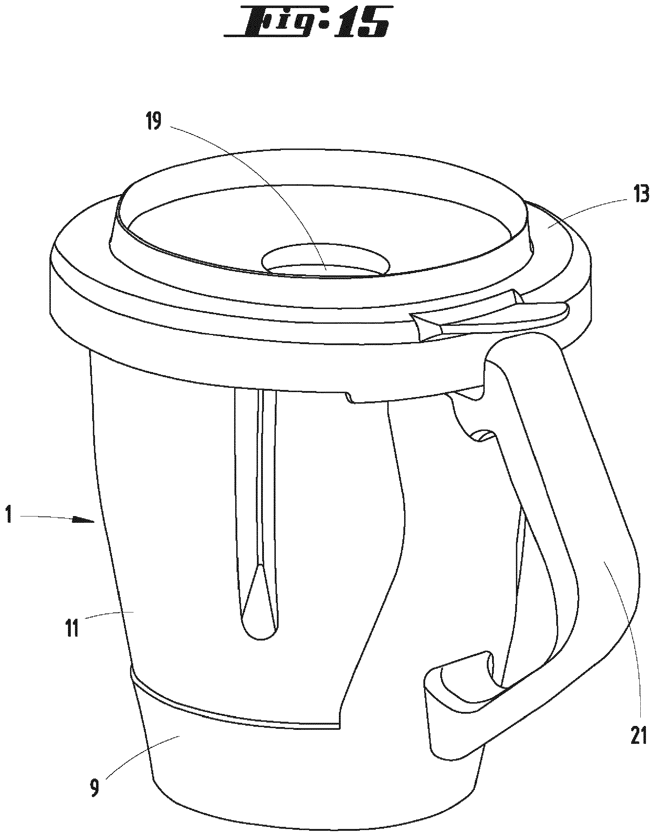

Die Deckelverriegelungseinrichtung 14 gemäß den Figuren 12 und 13 weist ein schwenkbares Funktionselement 17 auf, welches an einer an dem Topf 11 des Zubereitungsgefäßes 1 angeordneten Schwenkachse 28 gelagert ist. Das Funktionselement 17 ist einerseits mechanisch mit einem Verriegelungsring 8 des Zubereitungsgefäßes 1 verbunden, welcher rotierbar an einer Außenwandung des Topfes 11 gelagert ist, andererseits weist das Funktionselement 17 eine mechanische Wirkverbindung zu einem ebenfalls ringförmigen Deckelverriegelungselement 24 auf, welches in Umfangsrichtung einer Topföffnung 12 rotierbar an dem Topf 11 gelagert ist. Bei einer Rotation des Verriegelungsringes 8 kommt es gleichzeitig zu einem Verschwenken des Funktionselementes 17 um die Schwenkachse 28, wodurch das Deckelverriegelungselement 24 entlang des Umfangs der Topföffnung 12 rotiert wird. Bei der Rotation des Deckelverriegelungselementes 24 greift ein Schieber 37 des Deckelverriegelungselementes 24 an einer korrespondierenden Gegenkontur 35 des Deckels 13 an und rotiert diesen relativ zu dem Topf 11. Aufgrund der Rotation des Deckels 13 kommt es zu einer Bajonettverbindung zwischen Verriegelungsvorsprüngen 34 des Topfes 11 und Verriegelungskonturen 18 des Deckels 13. Der Deckel 13 ist dann sicher mit dem Topf 11 verriegelt. Dies ist von außen in Fig. 15 dargestellt. Die Betätigungseinrichtung 7 der Küchenmaschine 4 dient somit einerseits zum Antrieb der Verriegelungseinrichtung 5, und andererseits zur Betätigung der Deckelverriegelungseinrichtung 14. Die Rotationsbewegung des Verriegelungsringes 8 wird dabei mittels des schwenkbaren Funktionselementes 17 in eine Rotationsbewegung auch des Deckelverriegelungselementes 24 umgesetzt. Besonders vorteilhaft ist es dabei, wenn das Funktionselement 17 in die Wandung 20 des Topfes 11 oder in den Topfgriff 21 integriert ist, um von außen eine glatte Oberfläche des Zubereitungsgefäßes 1 zu schaffen, die einfach zu reinigen ist. In diesem Sinne empfiehlt es sich auch besonders, wenn das Funktionselement 17 aus einem elastischen Material besteht und sich bei der Schwenkbewegung an die Form des Topfes 11 anlegen kann. Dadurch kann das Funktionselement 17 in jeder Schwenkposition formkorrespondierend an der Außenwandung des Topfes 11 anliegen, beispielsweise bevorzugt innerhalb eines Hohlraumes der Wandung 20 des Topfes 11. Die Erkennung einer aktuellen Rotationsposition des Deckels 13 - und damit auch seines Verriegelungszustands - kann durch Endanschläge erfolgen, welche den Bewegungsbereich des Deckels 13 und somit auch des Deckelverriegelungselementes 24 begrenzen. Auch durch Auswerten eines Rotationswinkels des Betätigungselementes 29 der Betätigungseinrichtung 7 der Küchenmaschine 4 kann überprüft werden, ob der Deckel 13 korrekt verriegelt wurde oder nicht.

Die Figuren 17 und 18 zeigen alternative Ausführungsformen eines Zubereitungsgefäßes 1 mit einer Deckelverriegelungseinrichtung 14. Die Deckelverriegelungseinrichtung 14 gemäß Fig. 17 weist eine Rotationswelle 16 auf, die von einem Verriegelungsring 8, welcher an einem Topffuß 9 des Zubereitungsgefäßes 1 angeordnet ist, bis zu einer Topföffnung 12 des Topfes 11 ragt. Im Bereich der Topföffnung 12 weist die Rotationswelle 16 ein Verzahnungselement 36 auf, welches mit einer Verzahnung eines Deckelverriegelungselementes 24 wechselwirkt. Bei Rotation des Verriegelungsringes 8 kommt es zu einer Rotation der Rotationswelle 16 und damit zu einer Übertragung der Rotationsbewegung auf das Deckelverriegelungselement 24, welches beispielsweise wie zuvor mit Bezug zu den Figuren 12 bis 16 erläutert einen Deckel 13 gegenüber dem Topf 11 des Zubereitungsgefäßes 1 rotiert.

Die Fig. 18 zeigt eine alternative Ausführung, bei welcher eine Übertragung der Rotationsbewegung eines Verriegelungsringes 8 auf ein Deckelverriegelungselement 24 über mehrere, hier beispielsweise vier, Übertragungselemente 30 erfolgt. Die Übertragungselemente 30 können beispielsweise Zahnräder sein, wobei benachbarte Zahnräder gegensinnig rotieren.

### Liste der Bezugszeichen

| | | | |
|---|---|---|---|
| 1 | Zubereitungsgefäß | 28 | Schwenkachse |
| 2 | Aufnahmebereich | 29 | Betätigungselement |
| 3 | Basisgerät | 30 | Übertragungselement |
| 4 | Küchenmaschine | 31 | Elektromotor |
| 5 | Verriegelungseinrichtung | 32 | Durchtrittsöffnung |
| 6 | Kontaktelement | 33 | Gehäuseöffnung |
| 7 | Betätigungseinrichtung | 34 | Verriegelungsvorsprung |
| 8 | Verriegelungsring | 35 | Gegenkontur |
| 9 | Topffuß | 36 | Verzahnungselement |
| 10 | Vorsprung | 37 | Schieber |
| 11 | Topf | | |
| 12 | Topföffnung | | |
| 13 | Deckel | | |
| 14 | Deckelverriegelungseinrichtung | | |
| 15 | Gegenelement | | |
| 16 | Rotationswelle | | |
| 17 | Funktionselement | | |
| 18 | Verriegelungskontur | | |
| 19 | Deckelöffnung | | |
| 20 | Wandung | | |
| 21 | Topfgriff | | |
| 22 | Display | | |
| 23 | Schalter | | |
| 24 | Deckelverriegelungselement | | |
| 25 | Befestigungselement | | |
| 26 | Nut | | |
| 27 | Ring | | |

## Patentansprüche

1. Zubereitungsgefäß (1) zum Verbinden mit einem Aufnahmebereich (2) eines Basisgerätes (3) einer elektromotorisch betriebenen Küchenmaschine (4), wobei das Zubereitungsgefäß (1) eine Verriegelungseinrichtung (5) zum Verriegeln des Zubereitungsgefäßes (1) mit dem Basisgerät (3) der Küchenmaschine (4) aufweist, wobei die Verriegelungseinrichtung (5) ein verlagerbares Kontaktelement (6) aufweist, welches so an dem Zubereitungsgefäß (1) angeordnet ist, dass dieses bei einem ordnungsgemäß mit dem Basisgerät (3) verbundenen Zustand des Zubereitungsgefäßes (1) von einer korrespondierenden Betätigungseinrichtung (7) des Aufnahmebereiches (2) der Küchenmaschine (4) betätigbar ist, um mittels der Verriegelungseinrichtung (5) ein Verriegeln des Zubereitungsgefäßes (1) zu bewirken, **dadurch gekennzeichnet, dass** die Verriegelungseinrichtung (5) einen das Kontaktelement (6) aufweisenden Verriegelungsring (8) aufweist, welcher in Umfangsrichtung des Zubereitungsgefäßes (1) rotierbar an dem Zubereitungsgefäß (1) gelagert ist.

2. Zubereitungsgefäß (1) nach Anspruch 1, **dadurch gekennzeichnet, dass** der Verriegelungsring (8) bezogen auf eine übliche Gebrauchsstellung des Zubereitungsgefäßes (1) unterseitig an dem Zubereitungsgefäß (1) angeordnet ist.

3. Zubereitungsgefäß (1) nach Anspruch 1, **dadurch gekennzeichnet, dass** der Verriegelungsring (8) zumindest einen Vorsprung (10) aufweist, welcher geeignet ist, hinter ein korrespondierendes Gegenelement (15) des Basisgerätes (3) der Küchenmaschine (4) zu greifen, um das Zubereitungsgefäß (1) mit dem Basisgerät (3) zu verriegeln.

4. Zubereitungsgefäß (1) nach einem der vorhergehenden Ansprüche, **dadurch gekennzeichnet, dass** das Kontaktelement (6) eine Verzahnung des Verriegelungsringes (8) ist.

5. Zubereitungsgefäß (1) nach einem der vorhergehenden Ansprüche, **dadurch gekennzeichnet, dass** das Zubereitungsgefäß (1) einen Topf (11), einen eine Topföffnung (12) des Topfes (11) verschließenden Deckel (13) und eine Deckelverriegelungseinrichtung (14) zum Verriegeln des Topfes (11) mit dem Deckel (13) aufweist, wobei die Deckelverriegelungseinrichtung (14) eine mechanische Wirkverbindung zu der Verriegelungseinrichtung (5) derart aufweist, dass eine Betätigung der Verriegelungseinrichtung (5) eine Betätigung der Deckelverriegelungseinrichtung (14) bewirkt.

6. Zubereitungsgefäß (1) nach Anspruch 5, **dadurch gekennzeichnet, dass** die Deckelverriegelungseinrichtung (14) ein schwenkbar mit dem Verriegelungsring (8) der Verriegelungseinrichtung (5) verbundenes Funktionselement (17) aufweist, welches von dem Verriegelungsring (8) zu der Topföffnung (12) geführt ist, oder dass die Deckelverriegelungseinrichtung (14) eine von dem Verriegelungsring (8) angetriebene Rotationswelle (16) aufweist, die von dem Verriegelungsring (8) zu der Topföffnung (12) geführt ist.

7. Zubereitungsgefäß (1) nach Anspruch 5, **dadurch gekennzeichnet, dass** die Deckelverriegelungseinrichtung (14) ein Deckelverriegelungselement (24) aufweist, welches ausgebildet ist, hinter einen Teilbereich (18) des Deckels (13) zu greifen und/oder den Deckel (13) relativ zu dem Topf (11) zu verlagern, und dadurch eine Verriegelung des Topfes (11) mit dem Deckel (13) zu bewirken.

8. Zubereitungsgefäß (1) nach Anspruch 6, **dadurch gekennzeichnet, dass** die Deckelverriegelungseinrichtung (14) ein Deckelverriegelungselement (24) aufweist, welches ausgebildet ist, hinter einen Teilbereich (18) des Deckels (13) zu greifen und/oder den Deckel (13) relativ zu dem Topf (11) zu verlagern, und dadurch eine Verriegelung des Topfes (11) mit dem Deckel (13) zu bewirken.

9. Zubereitungsgefäß (1) nach Anspruch 6 oder 8, **dadurch gekennzeichnet, dass** das Funktionselement (17) oder die Rotationswelle (16) stabförmig mit einer überwiegenden Längserstreckung ausgebildet ist, wobei das Funktionselement (17) oder die Rotationswelle (16) insbesondere durch eine Wandung (20) des Topfes (11) und/ oder einen Topfgriff (21) des Topfes (11) geführt ist.

10. Elektromotorisch betriebene Küchenmaschine (4), insbesondere Mixgerät, mit einem Basisgerät (3) und einem mit einem Aufnahmebereich (2) des Basisgerätes (3) verbindbaren Zubereitungsgefäß (1), **dadurch gekennzeichnet, dass** das Zubereitungsgefäß (1) nach einem der vorhergehenden Ansprüche ausgebildet ist, und dass das Basisgerät (3) eine Betätigungseinrichtung (7) aufweist, welche eingerichtet ist, die Verriegelungseinrichtung (5) des Zubereitungsgefäßes (1) in einem miteinander verbundenen Zustand von Basisgerät (3) und Zubereitungsgefäß (1) über das Kontaktelement (6) der Verriegelungseinrichtung (5) zu betätigen.

## Claims

1. A preparation vessel (1) for connection with a receiving area (2) of a base unit (3) of a food processor driven by an electric motor, wherein the preparation vessel (1) has a locking assembly (5) for locking the preparation vessel (1) with the base unit (3) of the food processor (4), wherein the locking assembly (5) has a displaceable contact element (6), which is arranged on the preparation vessel (1) in such a way that it can be activated by a corresponding activating assembly (7) of the receiving area (2) of the food processor (4) with the preparation vessel (1) in a state properly connected with the base unit (3), so as to induce the locking of the preparation vessel (1) by means of the locking assembly (5), **characterized in that** the locking assembly (5) has a locking ring (8), which has the contact element (6) and which is mounted on the preparation vessel (1) so that it can rotate in peripheral direction of the preparation vessel (1).

2. The preparation vessel (1) according to claim 1, **characterized in that** the locking ring (8) is arranged on the bottom side of the preparation vessel (1) in relation to a usual use position of the preparation vessel (1).

3. The preparation vessel (1) according to claim 1, **characterized in that** the locking ring (8) has at least one projection (10), which is suitable to engage behind a corresponding counter-element (15) of the base unit (3) of the food processor (4), so as to lock the preparation vessel (1) with the base unit (3).

4. The preparation vessel (1) according to one of the preceding claims, **characterized in that** the contact element (6) is a tooth system of the locking ring (8).

5. The preparation vessel (1) according to one of the preceding claims, **characterized in that** the preparation vessel (1) has a pot (11), a cover (13) that closes a pot opening (12) of the pot (11), and a cover locking assembly (14) for locking the pot (11) with the cover (13), wherein the cover locking assembly (14) is mechanically operatively connected with the locking assembly (5) in such a way that activating the locking assembly (5) causes the cover locking assembly (14) to be activated.

6. The preparation vessel (1) according to claim 5, **characterized in that** the cover locking assembly (14) has a functional element (17) that is pivotably connected with the locking ring (8) of the locking assembly (5), and guided from the locking ring (8) to the pot opening (12), or that the cover locking assembly (14) has a rotating shaft (16) that is driven by the locking ring (8), and guided from the locking ring (8) to the pot opening (12).

7. The preparation vessel (1) according to claim 5, **characterized in that** the cover locking assembly (14) has a cover locking element (24) that is designed to engage behind a partial area (18) of the cover (13) and/or displace the cover (13) relative to the pot (11), and thereby bring about a locking of the pot (11) with the cover (13).

8. The preparation vessel (1) according to claim 6, **characterized in that** the cover locking assembly (14) has a cover locking element (24) that is designed to engage behind a partial area (18) of the cover (13) and/or displace the cover (13) relative to the pot (11), and thereby bring about a locking of the pot (11) with the cover (13).

9. The preparation vessel (1) according to claim 6 or 8, **characterized in that** the functional element (17) or the rotation shaft (16) has a rodlike design with a predominantly longitudinal extension, wherein the functional element (17) or the rotation shaft (16) is guided in particular via a wall (20) of the pot (11) and/or a pot handle (21) of the pot (11).

10. A food processor (4) driven by an electric motor, in particular a mixing device, with a base unit (3) and a preparation vessel (1) that can be connected with a receiving area (2) of the base unit (3), **characterized in that** the preparation vessel (1) is designed according to one of the preceding claims, and that the base unit (3) has an activating assembly (7) that is set up to activate the locking assembly (5) of the preparation vessel (1) via the contact element (6) of the locking assembly (5) with the base unit (3) and preparation vessel (1) connected with each other.

## Revendications

1. Récipient de préparation (1) destiné à être relié à une zone de réception (2) d'un appareil de base (3) d'un robot ménager (4) actionné par un moteur électrique, le récipient de préparation (1) présentant un dispositif de verrouillage (5) pour verrouiller le récipient de préparation (1) à l'appareil de base (3) du robot ménager (4), le dispositif de verrouillage (5) présentant un élément de contact (6) déplaçable, qui est disposé sur le récipient de préparation (1) de telle sorte, que celui-ci peut être actionné, lorsque le récipient de préparation (1) est correctement relié à l'appareil de base (3), par un dispositif d'actionnement correspondant (7) de la zone de réception (2) du robot ménager (4), afin de provoquer un verrouillage du récipient de préparation (1) au moyen du dispositif de verrouillage (5), **caractérisé en ce que** le dispositif de verrouillage (5) comporte une bague de verrouillage (8) présentant l'élément de contact (6), laquelle est montée sur le récipient de préparation (1) de manière à pouvoir tourner dans direction périphérique du récipient de préparation (1).

2. Récipient de préparation (1) selon la revendication 1, **caractérisé en ce que** la bague de verrouillage (8) est disposé sur le côté inférieur du récipient de préparation (1) par rapport à une position d'utilisation habituelle du récipient de préparation (1).

3. Récipient de préparation (1) selon la revendication 1, **caractérisé en ce que** la bague de verrouillage (8) comprend au moins une saillie (10) adaptée pour s'engager derrière un contre-élément correspondant (15) de l'appareil de base (3) du robot ménager (4) afin de verrouiller le récipient de préparation (1) avec l'appareil de base (3).

4. Récipient de préparation (1) selon l'une des revendications précédentes, **caractérisé en ce que** l'élément de contact (6) est une denture de la bague de verrouillage (8).

5. Récipient de préparation (1) selon l'une des revendications précédentes, **caractérisé en ce que** le récipient de préparation (1) présente une casserole (11), un couvercle (13) fermant une ouverture de casserole (12) de la casserole (11) et un dispositif de verrouillage de couvercle (14) pour verrouiller la casserole (11) avec le couvercle (13), le dispositif de verrouillage de couvercle (14) présentant une liaison active mécanique avec le dispositif de verrouillage (5) de telle sorte qu'un actionnement du dispositif de verrouillage (5) provoque un actionnement du dispositif de verrouillage de couvercle (14).

6. Récipient de préparation (1) selon la revendication 5, **caractérisé en ce que** le dispositif de verrouillage de couvercle (14) présente un élément fonctionnel (17) relié de manière pivotante à la bague de verrouillage (8) du dispositif de verrouillage (5), qui est guidé de la bague de verrouillage (8) vers l'ouverture du pot (12), ou **en ce que** le dispositif de verrouillage du couvercle (14) présente un arbre de rotation (16) entraîné par la bague de verrouillage (8), qui est guidé de la bague de verrouillage (8) vers l'ouverture du pot (12).

7. Récipient de préparation (1) selon la revendication 5, **caractérisé en ce que** le dispositif de verrouillage de couvercle (14) présente un élément de verrouillage de couvercle (24) qui est conçu pour s'engager derrière une zone partielle (18) du couvercle (13) et/ou pour déplacer le couvercle (13) par rapport à la casserole (11), et pour provoquer ainsi un verrouillage de la casserole (11) avec le couvercle (13).

8. Récipient de préparation (1) selon la revendication 6, **caractérisé en ce que** le dispositif de verrouillage de couvercle (14) présente un élément de verrouillage de couvercle (24) qui est conçu pour s'engager derrière une zone partielle (18) du couvercle (13) et/ou pour déplacer le couvercle (13) par rapport à la casserole (11), et pour provoquer ainsi un verrouillage de la casserole (11) avec le couvercle (13).

9. Récipient de préparation (1) selon la revendication 6 ou 8, **caractérisé en ce que** l'élément fonctionnel (17) ou l'arbre de rotation (16) est réalisé en forme de barre avec une extension longitudinale prépondérante, l'élément fonctionnel (17) ou l'arbre de rotation (16) étant guidé en particulier par une paroi (20) du pot (11) et/ou une poignée de pot (21) du pot (11).

10. Robot ménager (4) actionné par un moteur électrique, en particulier mixeur, comprenant un appareil de base (3) et un récipient de préparation (1) pouvant être relié à une zone de réception (2) de l'appareil de base (3), **caractérisé en ce que** le récipient de préparation (1) est conçu selon l'une des revendications précédentes, et **en ce que** l'appareil de base (3) présente un dispositif d'actionnement (7) qui est conçu pour actionner le dispositif de verrouillage (5) du récipient de préparation (1) dans un état relié entre l'appareil de base (3) et le récipient de préparation (1) via l'élément de contact (6) du dispositif de verrouillage (5).
